(19) Europäisches Patentamt
European Patent Office
Office européen des brevets

(11) **EP 2 994 802 B1**

(12) **EUROPÄISCHE PATENTSCHRIFT**

(45) Veröffentlichungstag und Bekanntmachung des Hinweises auf die Patenterteilung:
**02.09.2020   Patentblatt 2020/36**

(21) Anmeldenummer: **14721410.0**

(22) Anmeldetag: **06.05.2014**

(51) Int Cl.:
**G05B 19/418** (2006.01)

(86) Internationale Anmeldenummer:
**PCT/EP2014/059205**

(87) Internationale Veröffentlichungsnummer:
**WO 2014/180826 (13.11.2014 Gazette 2014/46)**

(54) **ANLAGE ZUR HERSTELLUNG VON PRODUKTEN**

PLANT FOR PRODUCING PRODUCTS

INSTALLATION DE FABRICATION DE PRODUITS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **10.05.2013   DE 102013008065**

(43) Veröffentlichungstag der Anmeldung:
**16.03.2016   Patentblatt 2016/11**

(73) Patentinhaber: **Volkswagen Aktiengesellschaft 38440 Wolfsburg (DE)**

(72) Erfinder: **GRESCHKE, Peter 38444 Wolfsburg (DE)**

(56) Entgegenhaltungen:
**EP-A1- 2 239 093          EP-A2- 0 107 191**
**DE-A1-102005 034 079          DE-A1-102007 047 279**
**JP-A- H11 188 579          US-A- 4 309 600**

**Beschreibung**

Die Erfindung betrifft eine Anlage zur Herstellung von Produkten, insbesondere zur Herstellung von Fahrzeugen oder Fahrzeugkomponenten.

Insbesondere in der Fahrzeugproduktion werden seit vielen Jahren Fertigungslinien zur Fließfertigung von Fahrzeugen eingesetzt, wobei die aufeinanderfolgenden Arbeitsstationen über ein Transportsystem in Reihe miteinander verbunden sind und das Transportsystem die Fahrzeuge in ihren jeweiligen Fertigstellungsgraden gemäß einer vorgegebenen einheitlichen Taktzeit von Arbeitsstation zu Arbeitsstation transportiert.

In den letzten Jahren hat sich in der Fahrzeugproduktion jedoch die Variantenvielfalt bei der Herstellung eines jeweiligen Fahrzeugtyps, insbesondere durch die Implementierung von Elektrofahrzeugen bzw. Hybridfahrzeugen, stark erhöht. Dies kann bei der gemischten Montage solcher Fahrzeuge zu Taktzeitspreizungen führen, welche wiederum zu Problemen in der Synchronisation der Arbeit und zu einer Produktivitätsminderung führen können.

Aus DE 10 2007 047 279 A1 ist eine Anlage zur Herstellung von Zusammenbaueinheiten, insbesondere Karosserieeinheiten, bekannt, welche mehrere Bearbeitungsmodule mit wenigstens einem automatisierten Bearbeitungsgerät zur Bearbeitung der Zusammenbaueinheiten, ein die Bearbeitungsmodule verbindendes Transportsystem für die Zusammenbaueinheiten und eine wenigstens die Bearbeitungsmodule und das Transportsystem steuernde Steuervorrichtung aufweist, welche an die Bearbeitungsmodule Arbeitsinformationen ausgibt. Die Anlage ist so ausgebildet, dass wenigstens eine als von einem nachgeordneten Bearbeitungsgerät in einem Bearbeitungsmodul oder in einem nachgeordneten Bearbeitungsmodul ausführbar vordefinierte Arbeitsaufgabe variabel wenigstens einem nachgeordneten Bearbeitungsgerät in dem Bearbeitungsmodul oder einem nachgeordneten Bearbeitungsmodul mit einer Kapazität zur Durchführung dieser Arbeitsaufgabe zuordenbar ist.

Weitere Anlagen zur Herstellung von Produkten sind aus DE 10 2005 034 079 A1, EP 0 107 191 A2, US 4 309 600 A, EP 2 239 093 A1 und JP H11 188579 A bekannt.

Der Erfindung liegt die Aufgabe zugrunde, eine Anlage bereitzustellen zur Herstellung von Produkten mittels einer vorbestimmten Anzahl von jeweils mindestens einen Arbeitsschritt enthaltenden unterschiedlichen Arbeitspaketen, so dass die Anlage eine erhöhte Flexibilität und Produktivität aufweist.

Dies wird mit einer Anlage gemäß Anspruch 1 erreicht. Weiterbildungen der Erfindung sind in den abhängigen Ansprüchen definiert.

Ein Verfahren bzw. eine Anlage zur Herstellung von Produkten mittels einer vorbestimmten Anzahl von jeweils mindestens einen Arbeitsschritt enthaltenden unterschiedlichen Arbeitspaketen weist eine vorbestimmte Anzahl von Arbeitsstationen, die eingerichtet sind, die Anzahl von Arbeitspaketen in einer vorbestimmten Reihenfolge nacheinander abzuarbeiten, um die Produkte herzustellen, wobei mindestens eine der Arbeitsstationen als Wahlarbeitsstation ausgebildet ist, sodass in dieser mindestens zwei unterschiedliche Arbeitspakete der Anzahl von Arbeitspaketen wahlweise abarbeitbar sind; ein Transportsystem, das eingerichtet ist, die Produkte in ihren jeweiligen Fertigstellungsgraden entlang eines Transportweges den Arbeitsstationen zuzuführen und von diesen abzuführen und so eingerichtet ist, dass die Produkte von mehreren Positionen auf dem Transportweg aus jeweils mehreren der Arbeitsstationen wahlweise direkt zuführbar sind; und eine Steuervorrichtung auf, die eingerichtet ist, das Transportsystem zur Zu- und Abfuhr der Produkte und die Arbeitsstationen zur Abarbeitung der Arbeitspakete zu steuern und die Abarbeitung der unterschiedlichen Arbeitspakete in jeder als Wahlarbeitsstationen ausgebildeten Arbeitsstationen in Abhängigkeit von einem für die Arbeitspakete jeweils bestimmten Bedarf zu steuern.

Das Verfahren bzw. die Anlage zeichnet sich dadurch aus, dass die wenigstens eine als Wahlarbeitsstation ausgebildete Arbeitsstation so eingerichtet ist, dass darin sowohl ein der vorbestimmten Reihenfolge entsprechendes erstes Arbeitspaket als auch ein in der vorbestimmten Reihenfolge dem ersten Arbeitspaket nicht unmittelbar benachbartes zweites Arbeitspaket der vorbestimmten Anzahl von Arbeitspaketen wahlweise abarbeitbar sind.

Gemäß der Erfindung ist wenigstens eine der als Wahlarbeitsstationen ausgebildeten Arbeitsstationen so eingerichtet, dass eines der darin wahlweise abarbeitbaren unterschiedlichen Arbeitspakete von der Anzahl von Arbeitspaketen das Arbeitspaket mit einer längsten zur Abarbeitung erforderlichen Abarbeitungszeit ist und ein anderes der darin wahlweise abarbeitbaren unterschiedlichen Arbeitspakete von der Anzahl von Arbeitspaketen das Arbeitspaket mit einer kürzesten zur Abarbeitung erforderlichen Abarbeitungszeit ist.

Durch die Kombination dieser beiden Arbeitspakete auf einer Arbeitsstation kann im Rahmen einer gewünschten Taktzeit der maximale Arbeitskapazitätsüberschuss bezüglich des Arbeitspaketes kürzester Abarbeitungszeit vorteilhaft auf das Arbeitspaket längster Abarbeitungszeit übertragen werden, womit sich die Auslastung bzw. Produktivität der Anlage weiter erhöht.

Dadurch ist es möglich, die zur Herstellung der Produkte abzuarbeitenden Arbeitspakete mit höherem Freiheitsgrad auf die vorgesehenen Arbeitsstationen zu verteilen, wodurch die Flexibilität der das Verfahren umsetzenden Anlage erhöht ist.

Das Verfahren bzw. die Anlage dient zur Herstellung von Produkten, was sowohl die Montage als auch die Demontage von entsprechenden Einheiten einschließt. Bevorzugt kann das Verfahren bzw. die Anlage für Montageprozesse zur Herstellung von Fahrzeugen oder Fahrzeugkomponenten, insbesondere auch im Karosseriebau, eingesetzt werden.

Zur weiteren Erhöhung der Flexibilität können bevorzugt mehrere der Arbeitsstationen jeweils als Wahlarbeitsstation ausgebildet sein, sodass in diesen jeweils mindestens zwei unterschiedliche Arbeitspakete der Anzahl von Arbeitspaketen wahlweise abarbeitbar sind.

Bevorzugt können die von der Steuervorrichtung durchgeführten Steuerungen und Bestimmungen dynamisch bzw. in Echtzeit durchgeführt werden, sodass die Anlage sich stets den aktuellen Herstellungsbedingungen bzw. dem aktuellen für die Arbeitspakete jeweils bestimmten Bedarf anpasst, insbesondere bei mehreren Varianten einer Mixfertigung.

Gemäß einer Ausführungsform ist die Steuervorrichtung eingerichtet, den Bedarf auf Basis von wenigstens einem zu bestimmen von einer für die Arbeitspakete jeweils bestimmten erforderlichen Abarbeitungszeit, einer jeweils bestimmten Verfügbarkeit von zur Abarbeitung der unterschiedlichen Arbeitspakete jeweils eingerichteten Arbeitsstationen, und einer jeweils bestimmten Produktivität bzw. Ausbringmenge der zur Abarbeitung der unterschiedlichen Arbeitspakete jeweils eingerichteten Arbeitsstationen.

Wie oben schon erläutert, kann sich die zur Abarbeitung eines jeweiligen Arbeitspaketes erforderliche Abarbeitungszeit z.B. durch Mischfertigung unterschiedlicher Varianten eines Produktes oder durch z.B. eine aufwendige Nacharbeit verkürzen oder verlängern, wodurch sich auch der Bedarf für das jeweilige Arbeitspaket entsprechend vermindert bzw. erhöht. Durch z.B. gezielte Ein- oder Ausschaltung oder auch z.B. durch technischen Ausfall einer oder mehrerer Arbeitsstation(en) kann sich auch die Verfügbarkeit von zur Abarbeitung der unterschiedlichen Arbeitspakete jeweils eingerichteten Arbeitsstationen ändern, wodurch sich auch der Bedarf für das jeweilige Arbeitspaket entsprechend verändert. Schließlich kann sich z.B. durch die Anzahl und/oder die unterschiedlichen Befähigungen von an den jeweiligen Arbeitsstationen eingesetzten Arbeitspersonen die Produktivität der zur Abarbeitung der unterschiedlichen Arbeitspakete jeweils eingerichteten Arbeitsstationen ändern, wodurch sich auch der Bedarf für das jeweilige Arbeitspaket entsprechend verändert.

Durch die Einbeziehung dieser o.g. Parameter in den zur Steuerung der Abarbeitung der unterschiedlichen Arbeitspakete in den als Wahlarbeitsstationen ausgebildeten Arbeitsstationen herangezogenen Bedarf kann sich die Anlage noch flexibler automatisch an die aktuellen Herstellungsbedingungen anpassen.

Gemäß einer weiteren Ausführungsform ist die Steuervorrichtung eingerichtet, den Bedarf als Arbeitstationenbedarf zu bestimmen, und ist eingerichtet den Arbeitstationenbedarf eines jeweiligen Arbeitspaketes der Anzahl von Arbeitspaketen zu bestimmen auf Basis der Anzahl von Arbeitsstationen, der Anzahl von Arbeitspaketen, der für das jeweilige Arbeitspaket bestimmten erforderlichen Abarbeitungszeit und einer gewünschten Taktzeit der Anlage.

Somit kann für jedes Arbeitspaket die Anzahl von zu dessen Abarbeitung innerhalb einer gewünschten Taktzeit der Anlage erforderlichen Arbeitsstationen angepasst an die aktuellen Bedingungen bestimmt werden und auf dieser Basis die prozentuale Belegung der als Wahlarbeitsstationen ausgebildeten Arbeitsstationen mit den unterschiedlichen Arbeitspaketen aktuell angepasst werden.

Gemäß noch einer Ausführungsform ist das Transportsystem so eingerichtet, dass die Produkte von jeder beliebigen Position auf dem Transportweg aus jeder der Arbeitsstationen wahlweise direkt zuführbar sind. Mit anderen Worten sind alle Arbeitsstationen untereinander verbunden, sodass es ermöglicht ist, von jeder Position auf dem Transportweg bzw. jeder Arbeitsstation aus Produkte wie Fahrzeuge oder Fahrzeugkomponenten zu jeder anderen Arbeitsstation zu transportieren. Alle Arbeitsstationen können somit individuell und ohne vordefinierte Fließrichtung angefahren werden, womit die Flexibilität der Anlage weiter erhöht wird.

Gemäß noch einer weiteren Ausführungsform ist die Anzahl von Arbeitsstationen so bemessen, dass zur Abarbeitung jedes Arbeitspaketes jeweils mindestens zwei Arbeitsstationen vorgesehen sind. Durch diese Redundanz bezüglich jedes Arbeitspaketes in Verbindung mit dem autonomen Transportsystem weist die Anlage eine noch größere Flexibilität zur Kompensation von Fertigungszeitveränderungen, Anlagenstörungen usw. auf. Gemäß einer weiteren Ausführungsform ist die Anzahl von pro Arbeitspaket vorgesehenen Arbeitsstationen gleich der Anzahl von Arbeitspaketen. Dies erhöht in vorteilhafter Weise die Stabilität der Anlage hinsichtlich der Realisierung von gewünschten Taktzeiten bzw. Produktionskapazitäten und Auslastungen.

Gemäß noch einer weiteren Ausführungsform sind hinsichtlich der in der vorbestimmten Reihenfolge Abarbeitung der unterschiedlichen Arbeitspakete aufeinanderfolgende jeweils als Wahlarbeitsstationen ausgebildete Arbeitsstationen jeweils so eingerichtet, dass in diesen sowohl das der vorbestimmten Reihenfolge jeweils entsprechende Arbeitspaket als auch das in der vorbestimmten Reihenfolge jeweils unmittelbar nachgeordnete Arbeitspaket wahlweise abarbeitbar sind, wobei die wenigstens eine der als Wahlarbeitsstationen ausgebildeten Arbeitsstationen, die so eingerichtet ist, dass darin sowohl das der vorbestimmten Reihenfolge entsprechende erste Arbeitspaket als auch das in der vorbestimmten Reihenfolge dem ersten Arbeitspaket nicht unmittelbar benachbarte zweite Arbeitspaket wahlweise abarbeitbar sind, von einer in der vorbestimmten Reihenfolge letzten Arbeitsstation gebildet ist. Bevorzugt sind dabei alle in der vorbestimmten Reihenfolge aufeinanderfolgenden Arbeitsstationen als Wahlarbeitsstationen ausgebildet. Weiter bevorzugt kann dem letzten Arbeitspaket wieder das erste Arbeitspaket folgen, wobei der Aufbau der Anlage einer Linie mit "Überholspur" ähnelt kann, die es ermöglicht, einzelne Stationen zu überspringen. In diesem Sinne wird Transportwegeoptimiert eine Kreisanordnung bevorzugt.

Diese Ausgestaltung des erfindungsgemäßen Verfahrens und der entsprechenden erfindungsgemäßen Anlage bietet in vorteilhaft vereinfachter Form für jede der unterschiedlichen Arbeitsstationen die gewünschte Redundanz und damit für die Abarbeitung jedes der unterschiedlichen Arbeitspakete die gewünschte Flexibilität.

Gemäß einer Ausführungsform sind eine der vorbestimmten Anzahl der unterschiedlichen Arbeitspakete entsprechende erste Teilanzahl der Anzahl von Arbeitsstationen entsprechend der vorbestimmten Reihenfolge der Abarbeitung der unterschiedlichen Arbeitspakete in einer ersten Linie angeordnet, wobei mindestens eine richtungsgleich neben der ersten Linie (bevorzugt parallel dazu) verlaufende weitere Linie mit einer darin entsprechend der vorbestimmten Reihenfolge der Abarbeitung der unterschiedlichen Arbeitspakete angeordneten weiteren Teilanzahl der Anzahl von Arbeitsstationen vorgesehen ist, und wobei die in jeder weiteren Linie angeordneten Arbeitsstationen in einer senkrecht zu den Linien verlaufenden Richtung bezüglich eines der darin abarbeitbaren Arbeitspakete redundant zu den in der ersten Linie angeordneten Arbeitsstationen sind.

Mit anderen Worten sind die Arbeitsstationen ähnlich einer Matrix angeordnet (Matrix-Produktion), wobei sich unterschiedliche entsprechend der vorbestimmten Reihenfolge der Abarbeitung der unterschiedlichen Arbeitspakete angeordnete Arbeitsstationen entlang der ersten Zeile (ersten Linie) aneinander anschließen und sich senkrecht zur ersten Zeile (gemäß jeweiligen Spalten einer Matrix) zueinander redundante Arbeitsstationen aneinander anschließen.

Diese Anordnung lässt sich in einfacher und übersichtlicher Weise in Gebäude integrieren und realisiert neben einer mehrdimensionalen Redundanz kurze Transportwege zwischen den Arbeitsstationen.

Gemäß noch einer Ausführungsform ist im Transportweg mindestens einer Arbeitsstation, bevorzugt jeder Arbeitsstation, ein Puffer zugeordnet, in dem mindestens ein Produkt in einem jeweiligen Fertigstellungsgrad aufnehmbar ist. In diesem Kontext ist anzumerken, dass gemäß der Erfindung auch der Transportweg selbst als Puffer dienen kann, wobei zum Puffern das Produkt z.B. entweder stehen bleibt oder sich bewegt. Bevorzugt ist der Puffer der jeweiligen Arbeitsstation direkt vorgeordnet. Die jeweiligen Puffer dienen vorteilhaft dazu, temporäre minimale Über- bzw. Unterproduktionen eines Arbeitspaketes auszugleichen.

Im Folgenden werden bevorzugte Ausführungsformen des erfindungsgemäßen Verfahrens und einer entsprechenden Anlage zur Herstellung von Produkten unter Bezugnahme auf die beigefügten Figuren beschrieben werden.

Fig.1    zeigt schematisch den Aufbau einer üblichen einlinigen Anlage zur fließfertigungsmäßigen Herstellung von Produkten.

Fig.2    zeigt schematisch den Aufbau einer Anlage zur Herstellung von Produkten gemäß einer Ausführungsform der Erfindung.

Fig.3    zeigt schematisch den Aufbau einer Anlage zur Herstellung von Produkten gemäß einer weiteren Ausführungsform der Erfindung.

Fig.4    zeigt schematisch den Aufbau einer Anlage zur Herstellung von Produkten gemäß noch einer Ausführungsform der Erfindung.

Fig.5    zeigt schematisch den Aufbau einer Anlage zur Herstellung von Produkten gemäß noch einer weiteren Ausführungsform der Erfindung.

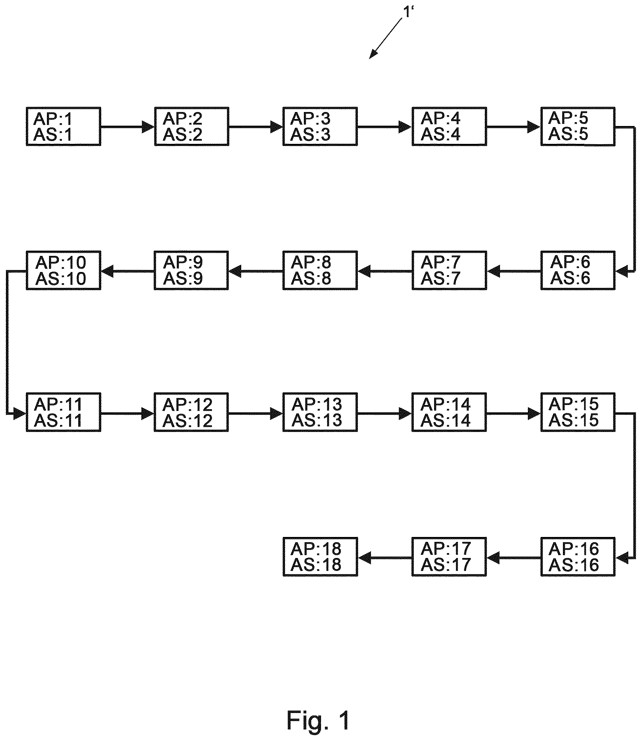

Im Folgenden wird zunächst unter Bezugnahme auf Fig.1, welche schematisch den Aufbau einer üblichen einlinigen Anlage 1' zur fließfertigungsmäßigen Herstellung von Produkten zeigt, eine übliche einlinige Fließfertigung betrachtet.

Als Anwendungsbeispiel für die Anlage 1' von Fig.1 kann ein Montageprozess in der Fahrzeugfertigung dienen. In dem unter Bezugnahme auf Fig.1 erläuterten Beispiel sind eine vorbestimmte Anzahl von jeweils mindestens einen Arbeitsschritt enthaltenden unterschiedlichen Arbeitspaketen AP und eine vorbestimmte Anzahl von zur Verfügung stehenden Arbeitspersonen MA als gegeben zu betrachten, wie in der folgenden Tabelle 1 gezeigt.

(Tabelle 1)

| Arbeitspersonen 18 [MA]: | | TZ: 1 min | |
|---|---|---|---|
| | | | |
| Arbeitspakete: | Abarbeitungsze it: | Arbeitsstatione n: | Auslastung AS: |
| | | | |
| AP1 | 0,77 [min/MA] | AS1/1MA | 77 % |
| AP2 | 0,75 [min/MA] | AS2/1MA | 75 % |

(fortgesetzt)

| Arbeitspersonen 18 [MA]: | | TZ: 1 min | |
|---|---|---|---|
| | | | |
| Arbeitspakete: | Abarbeitungsze it: | Arbeitsstatione n: | Auslastung AS: |
| AP3 | 0,83 [min/MA] | AS3/1MA | 83 % |
| AP4 | 0,91 [min/MA] | AS4/1MA | 91 % |
| AP5 | 0,81 [min/MA] | AS5/1MA | 81 % |
| AP6 | 0,73 [min/MA] | AS6/1MA | 73 % |
| AP7 | 1,00 [min/MA] | AS7/1MA | 100 % |
| AP8 | 1,00 [min/MA] | AS8/1MA | 100 % |
| AP9 | 1,00 [min/MA] | AS9/1MA | 100 % |
| AP10 | 1,00 [min/MA] | AS10/1MA | 100 % |
| AP11 | 1,00 [min/MA] | AS11/1MA | 100 % |
| AP12 | 1,00 [min/MA] | AS12/1MA | 100 % |
| AP13 | 0,83 [min/MA] | AS13/ 1MA | 83 % |
| AP14 | 0,94 [min/MA] | AS14/1MA | 94% |
| AP15 | 0,88 [min/MA] | AS15/ 1MA | 88 % |
| AP16 | 0,82 [min/MA] | AS16/ 1MA | 82 % |
| AP17 | 0,99 [min/MA] | AS17/ 1MA | 99 % |
| AP18 | 0,94 [min/MA] | AS18/ 1MA | 94 % |

Es sei im Weiteren beispielhaft festgelegt, dass die Arbeitspakete AP weder unterteilt noch in ihrer Reihenfolge verschoben werden sollen. Diese Rahmenbedingungen dienen nur zur Vereinfachung und leichteren Vergleichbarkeit mit den später noch beschriebenen Ausführungsformen der Erfindung.

Um die Montage in Form einer Linie abzubilden, einen Pull-Prozess realisierend, gilt es eine einheitliche Taktzeit TZ zu definieren, an der sich alle wie in Fig.1 gezeigten Arbeitsstationen AS1- AS18 ausrichten. Da die Größe der einzelnen Arbeitspakete AP vorgegeben ist, darf die einheitliche Taktzeit TZ die Dauer der längsten Arbeitspakete (AP7 bis AP12) nicht unterschreiten. Entsprechend ist die als Montagelinie ausgebildete Anlage 1' mit achtzehn Arbeitsstationen AS1-AS18 mit jeweils einer Arbeitsperson MA pro Arbeitsstation AS und einer Taktzeit TZ von 1 min ausgelegt. Betrachtet man nun die Auslastung der einzelnen Arbeitsstationen AS1-AS18, so ist festzustellen, dass nur sechs Arbeitsstationen (AS7-AS12) der achtzehn Arbeitsstationen AS1-AS18 voll ausgelastet sind. Die restlichen Arbeitsstationen (AS1-AS6 und AS13-AS18) weisen eine Auslastung zwischen 73 % und 99 % auf. Eine Reduzierung oder Anpassung der individuellen Taktzeiten wäre zwar durch den Einsatz von Puffern möglich, würde aber gegen das Pull-Prinzip verstoßen und Bestände aufbauen, die nicht abgearbeitet werden könnten, da die Arbeitspakete AP7 bis AP12 (Arbeitsstationen AS7 bis AS12) zu lange dauern. Demnach ist die durchschnittliche Produktivität in diesem Beispiel einer Fließfertigung auf der üblichen Anlage 1' mit 90 % anzugeben, wie in der folgenden Vorschrift (1) gezeigt.

$$\frac{\sum FZ(AP_n)}{\sum AS_n \times TZ} = \frac{16{,}2\ min}{18\ min} = 0{,}9 \approx 90\% \tag{1}$$

In Vorschrift (1) kennzeichnet der tiefgestellte Index "n" die Nummer der jeweiligen Arbeitspakete AP bzw. Arbeitsstationen AS und meint "FZ" die Abarbeitungszeit der jeweiligen Arbeitspakete AP.

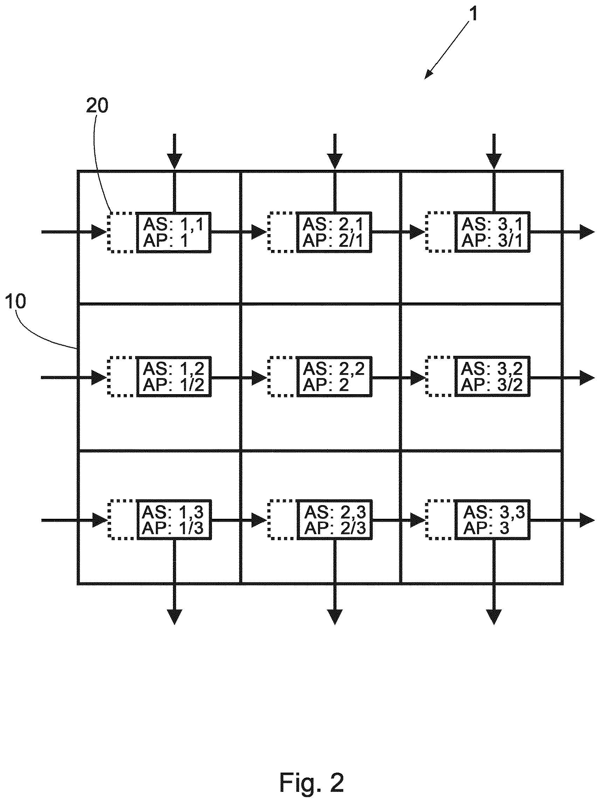

Nun wird unter Bezugnahme auf Fig.2 eine erste Ausführungsform des erfindungsgemäßen Verfahrens und einer entsprechenden Anlage 1 zur Herstellung von Produkten beschrieben werden. In Fig.2 ist nun gemäß einer Ausführungsform der Erfindung die in Fig.1 definierte Produktionsaufgabe mit den Mitteln einer sogenannten Matrix-Produktion dargestellt, wobei die Arbeitspakete AP1-AP18 von Fig.1 nun gemäß der in Fig.2 gezeigten Anlage 1 zu drei großen Arbeitspaketen AP1-AP3 zusammengefasst sind, wie in folgender Tabelle 2 gezeigt.

Tabelle 2

| AP1 | 4,80 [min/MA] |
|-----|---------------|
| AP2 | 6,00 [min/MA] |
| AP3 | 5,40 [min/MA] |

Ferner sind gemäß der in Fig.2 gezeigten Anlage 1 die zum Abarbeiten der Arbeitspakete AP1-AP3 eingerichteten Arbeitsstationen AS redundant vorgesehen, sodass für das Arbeitspaket AP1 die Arbeitsstationen AS1,1 und AS1,2 und AS1,3 vorgesehen sind, für das Arbeitspaket AP2 die Arbeitsstationen AS2,1 und AS2,2 und AS2,3 vorgesehen sind und für das Arbeitspaket AP3 die Arbeitsstationen AS3,1 und AS3,2 und AS3,3 vorgesehen sind.

Gemäß der in Fig.2 gezeigten Anlage 1 ist diese vorgesehen zur Herstellung von Produkten mittels einer vorbestimmten Anzahl von jeweils mindestens einen Arbeitsschritt enthaltenden unterschiedlichen Arbeitspaketen AP1-AP3 und weist eine vorbestimmte Anzahl von Arbeitsstationen AS1,1-AS1,3; AS2,1-AS2,3; AS3,1-AS3,3 auf, die eingerichtet sind, die Anzahl von Arbeitspaketen AP1-AP3 in einer vorbestimmten Reihenfolge nacheinander abzuarbeiten.

Wie aus Tabelle 2 entnehmbar, dauert das längste Arbeitspaket AP2 6 min, wenn analog zu Fig.1 und Tabelle 1 nur eine Arbeitsperson MA eingesetzt würde. Um eine zur Produktivität der Anlage von Fig.1 korrespondierende Situation zu schaffen, arbeiten nun an jeder Arbeitsstation AS zwei Arbeitspersonen MA, sodass eine Taktzeit TZ der Anlage 1 von 3 min realisiert wird. Eine Zusammenstellung der beispielhaften Parameter der in Fig.2 gezeigten Anlage 1 ist in der folgenden Tabelle 3 gezeigt.

(Tabelle 3)

| Arbeitspersonen 18 [MA]: | | TZ: 3 min | |
|--------------------------|------------------|-------------------|-----------------|
| | | | |
| Arbeitspakete: | Abarbeitungsze it: | Arbeitsstatione n: | Auslastung AS: |
| | | | |
| AP1 | 2,40 [min/MA] | AS1,1 / 2MA | 80% |
| AP1 | 2,40 [min/MA] | AS1,2 / 2MA | 80% |
| AP1 | 2,40 [min/MA] | AS1,3 / 2MA | 80% |
| AP2 | 3,00 [min/MA] | AS2,1 / 2MA | 100 % |
| AP2 | 3,00 [min/MA] | AS2,2 / 2MA | 100 % |
| AP2 | 3,00 [min/MA] | AS2,3 / 2MA | 100 % |
| AP3 | 2,70 [min/MA] | AS3,1 / 2MA | 90% |
| AP3 | 2,70 [min/MA] | AS3,2 / 2MA | 90% |
| AP3 | 2,70 [min/MA] | AS3,3 / 2MA | 90% |

Durch die dreifache redundante Anordnung der Arbeitsstationen AS bedeutet dies, dass im Durchschnitt jede Minute ein Produkt (hier ein Fahrzeug) fertigmontiert wird. In Summe ist sowohl die Anzahl von Arbeitspersonen MA als auch die Produktivität identisch mit der zuvor dargestellten Anlage 1', wie sich aus der nachfolgenden Vorschrift (2) entnehmen lässt.

$$\frac{\sum FZ(AP_n) \times 3}{\sum AS_n \times TZ \times 3} = \frac{16{,}2 \ min}{18 \ min} = 0{,}9 \approx 90\% \tag{2}$$

In Vorschrift (2) kennzeichnet der tiefgestellte Index "n" wieder die Nummer der jeweiligen Arbeitspakete AP bzw. Arbeitsstationen AS, entspricht der Faktor "3" einem Redundanzfaktor der Arbeitsstationen AS und meint "FZ" die Abarbeitungszeit der jeweiligen Arbeitspakete AP.

Für die Realisierung einer Matrix-Produktion sind gemäß der in Fig.2 gezeigten Anlage 1 noch zwei weitere konstruktive Maßnahmen vorgesehen.

Als Erstes ist ein in Fig.2 durch Verbindungslinien zwischen den einzelnen jeweils als Kästchen dargestellten Arbeitsstationen AS schematisiertes Transportsystem 10 vorgesehen, das eingerichtet ist, die Produkte (hier Fahrzeuge) in ihren jeweiligen Fertigstellungsgraden entlang eines von dem Transportsystem 10 definierten Transportweges den Arbeitsstationen AS zuzuführen und von diesen abzuführen und mindestens so eingerichtet ist, dass die Produkte von mehreren Positionen auf dem Transportweg aus jeweils mehreren der Arbeitsstationen AS wahlweise direkt zuführbar sind (Es sind nicht zwangsläufig alle theoretischen Verbindungen notwendig, werden aber zur Veranschaulichung in Fig.2 dargestellt).

Bevorzugt ist das Transportsystem 10 so eingerichtet ist, dass die Produkte von jeder beliebigen Position auf dem Transportweg aus jeder der Arbeitsstationen AS wahlweise direkt zuführbar sind. Mit anderen Worten verbindet das Transportsystem 10 bevorzugt alle Arbeitsstationen AS untereinander und ermöglicht es bevorzugt, von jeder Arbeitsstationen AS aus ein Produkt zu jeder anderen Arbeitsstationen AS zu transportieren. Das Transportsystem 10 sollte es z.B. ermöglichen, dass ein Produkt von der Arbeitsstation AS1,2 aus direkt zur Arbeitsstation AS3,1 oder umgekehrt transportiert werden kann. Die technische Umsetzung des Transportsystems 10 ist Fachleuten geläufig und kann in beliebiger Weise vorgenommen werden.

Als Zweites kann einer, mehreren oder allen Arbeitsstationen AS im Transportweg ein in Fig.2 jeweils gestrichelt an den Arbeitsstationen AS dargestellter Puffer 20 zugeordnet sein, in dem mindestens ein Produkt (z.B. Fahrzeug) in einem jeweiligen Fertigstellungsgrad aufnehmbar ist (in Fig.2 ist zur Veranschaulichung jeder Arbeitsstation ein Puffer 20 zugeordnet). Bevorzugt ist der Puffer 20 der jeweiligen Arbeitsstation AS direkt vorgeschaltet.

Merkmal der Matrix-Produktion ist es, eine taktunabhängige Fließfertigung zu ermöglichen. Dafür ist eine definierte Abfolge von Arbeitspaketen AP auf verschiedene Arbeitsstationen AS aufzuteilen, die nacheinander vom Produkt (hier Fahrzeug) angefahren werden, ohne dass alle Arbeitsstationen AS dieselbe Taktzeitvorgabe haben. Also im Fazit soll eine Arbeitsstation AS schneller arbeiten können als eine andere Arbeitsstation AS und soll trotzdem eine Fließfertigung aufrechterhalten bleiben ohne nennenswerte Bestände aufzubauen.

Die Grundlage hierfür bildet der zuvor beschriebene Aufbau und Anordnung. Prinzipiell ist es durch die universelle Anfahrbarkeit der Arbeitsstationen AS schon möglich, ausgelastete Arbeitsstationen AS zu umfahren und stattdessen freie Arbeitsstationen AS anzusteuern.

Neben den logistischen Anforderungen bedeutet Taktunabhängigkeit aber im Wesentlichen, die Anzahl der Arbeitsstationen AS, die ein gewisses Arbeitspaket AP abarbeiten können, skalieren zu können. Gelingt es z.B. die Anzahl der das Arbeitspaket AP2 ausführenden Arbeitsstationen AS zu erhöhen, so reduziert sich der durchschnittliche Zeitaufwand für das Arbeitspaket AP2. Um dies zu erreichen, kommt eine Umrüstung einer anderen Arbeitsstation AS nicht in Frage, da dieser Prozess extrem dynamisch sein müsste, um kurzfristig reagieren zu können.

Bei der mit der in Fig.2 gezeigten Anlage 1 realisierbaren Matrix-Produktion wird deshalb auf ein einfacheres Mittel zurückgegriffen. Mindestens eine der Arbeitsstationen AS wird als Wahlarbeitsstation ausgebildet, sodass in dieser mindestens zwei unterschiedliche Arbeitspakete AP der Anzahl von Arbeitspaketen AP1-AP3 wahlweise abarbeitbar sind. Mit anderen Worten werden mindestens eine Arbeitsstation AS, mehrere Arbeitsstationen AS oder alle Arbeitsstationen AS so ausgelegt (technisch als auch die Kompetenz der daran arbeitenden Arbeitspersonen MA), dass darin mindestens zwei unterschiedliche Arbeitspakete AP abgearbeitet werden können.

Die Auslegung, wie viele Arbeitsstationen AS wie oft redundant ausgelegt sind und wie viele Arbeitsstationen AS mehrere Arbeitspakete AP bearbeiten können, ist eine Frage der gewünschten Auslegung des Produktionssystems. Betrachtet man das geschilderte Beispiel ergibt sich das Bild, dass die Montage eines Produktes (Fahrzeugs) im optimalsten Fall 16,2 min benötigt (bei einer Arbeitsperson MA), wie in der folgenden Vorschrift (3) gezeigt.

$$\sum FZ(AP_n) = 16{,}2 \, [min] \tag{3}$$

Berücksichtig man den redundanten Aufbau gemäß der in Fig.2 gezeigten Anlage 2 und die zwei Arbeitspersonen MA pro Arbeitsstation AS, so ergibt sich eine durchschnittliche "Verbauzeit" von 2,7 min pro Arbeitsstation AS, wie gemäß der folgenden Vorschrift (4) definiert.

$$\frac{\sum FZ(AP_n)}{\sum AS_{n;1} * MA_{AS}} = \frac{16{,}2 \, min}{3 * 2} = 2{,}7 \, min \tag{4}$$

In Vorschrift (4) kennzeichnet der tiefgestellte Index "n" wieder die Nummer der jeweiligen Arbeitspakete AP bzw. Arbeitsstationen AS, meint "$MA_{AS}$" die Anzahl von Arbeitspersonen MA pro Arbeitsstation AS, meint "$AS_{n,1}$" die jeweiligen Arbeitsstationen AS1-AS3 ohne Redundanz und meint "FZ" die Abarbeitungszeit der jeweiligen Arbeitspakete AP.

Betrachtet man eine Taktzeit TZ von 2,7 min pro Arbeitsstation AS als Zielwert, ergibt sich die Situation, dass bei Arbeitspaket AP3 und damit bei den Arbeitsstationen AS3,1; AS3,2 und AS3,3 die Abarbeitungszeit FZ identisch mit der Solltaktzeit $TZ_{soll}$ von 2,7 min ist. Bei Arbeitspaket AP2 und damit bei den Arbeitsstationen AS2,1; AS2,2 und AS2,3 ist die Abarbeitungszeit FZ mit 3 min um 0,3 min zu lang gegenüber der Solltaktzeit $TZ_{soll}$ von 2,7 min, wodurch Arbeitspaket AP2 die Isttaktzeit $TZ_{ist}$ auf 3 min erhöhen und somit die Produktivität senken würde. Analog dazu ist bei Arbeitspaket AP1 und damit bei den Arbeitsstationen AS1,1; AS1,2 und AS1,3 die Abarbeitungszeit FZ mit 2,4 min um 0,3 min zu kurz gegenüber der Solltaktzeit $TZ_{soll}$ von 2,7 min.

Im Fazit stellt sich also für dieses Beispiel die Situation so dar, dass die Arbeitsstationen AS2,n genau die 0,3 min mehr Zeit brauchen, die die Arbeitsstationen AS1,n über haben. Es gilt also beide miteinander auszugleichen.

Hier findet das Grundprinzip der Matrix-Produktion Anwendung, nämlich das flexible Wechseln der Arbeitsinhalte einer Arbeitsstation AS. Für das beschriebene Anwendungsbeispiel bedeutet dies gemäß eines einfachsten Beispiels, dass alle Arbeitsstationen AS nur eine einzige Art von Arbeitspaket abarbeiten können, ausgenommen wie rein beispielhaft ausgewählt die Arbeitsstation AS1,3. Die Arbeitsstation AS1,3 wird nun so ausgestaltet, dass sowohl das Arbeitspaket AP1 als auch das Arbeitspaket AP2 abgearbeitet werden können. Um eine 100%-Auslastung aller Arbeitsstationen AS bei einer durchschnittlichen Taktzeit $TZ_{soll}$ von 2,7min zu realisieren, wird die Arbeitsstation AS1,3 nun im Wechsel das Arbeitspaket AP1 und das Arbeitspaket AP2 ausführen. Dabei soll die in der folgenden Vorschrift (5) definierte mathematische Bedingung erfüllt sein.

$$\frac{\sum AS}{\sum AP} \times \frac{FZ(AP_x)}{\sum AS(AP_x)} = TZ_{soll} \tag{5}$$

Ist die zu erreichende Taktzeit $TZ_{soll}$ bekannt, lässt sich gemäß der folgenden Vorschrift (6) als ein jeweiliger Arbeitstationenbedarf auch die notwendige Anzahl von Arbeitsstationen $[\Sigma AS(AP_X)]$ ermitteln, die ein bestimmtes Arbeitspaket ($AP_X$) ausführen.

$$\sum AS(AP_x) = \frac{\sum AS}{\sum AP} \times \frac{FZ(AP_x)}{TZ_{soll}} \tag{6}$$

Dies ergibt die in folgender Vorschrift (7) gezeigte Aufteilung der Arbeitsstationen AS für die einzelnen Arbeitspakete AP:

$$AP_1: \quad \sum AS(AP_1) = \frac{9}{3} \times \frac{2,4}{2,7} = 2\frac{2}{3}$$

$$AP_2: \quad \sum AS(AP_2) = \frac{9}{3} \times \frac{3}{2,7} = 3\frac{1}{3}$$

$$AP_3: \quad \sum AS(AP_3) = \frac{9}{3} \times \frac{2,7}{2,7} = 3 \tag{7}$$

Für den skizierten Anwendungsfall bedeutet dieses Ergebnis, dass die Arbeitsstation AS1,3 zwei Drittel der zur Verfügung stehenden durchschnittlichen Taktzeit TZ von 2,7min für das Arbeitspaket AP1 verwendet und das restliche eine Drittel für das Arbeitspaket AP2 verwendet. Dabei handelt es sich um die durchschnittliche Aufteilung der zwei Arbeitspakete AP1 und AP2 auf die eine Arbeitsstation AS1,3. Selbstverständlich werden dabei die notwendigen jeweiligen Abarbeitungszeiten FZ entsprechend dem jeweiligen Arbeitspaket AP1 bzw. AP2 berücksichtigt. Nachfolgende Tabelle 4 veranschaulicht die Aufteilung und Zuordnung der einzelnen Arbeitspakete AP1-AP3 über die Produktion von 120 Fahrzeugen als Produkten (bzw. über 108 min pro Arbeitsstation AS). Der Wert von 108 min pro Arbeitsstation AS ergibt sich dabei aus der Taktzeit $TZ_{soll}$ geteilt durch die Anzahl von redundant vorgesehenen Arbeitsstationen AS mal die Anzahl von zu produzierenden Produkten [(2,7min / 3)*120 Fahrzeuge = 108 min).

Tabelle 4

| $AS_{m;n}$ | AP1 | AP2 | AP3 |
|---|---|---|---|
| $AS_{1;1}$ | $\dfrac{108}{2,4} = 45$ | | |
| $AS_{1;2}$ | $\dfrac{108}{2,4} = 45$ | | |
| $AS_{1;3}$ | $\dfrac{108}{2,4} \times \dfrac{2}{3} = 30$ | $\dfrac{108}{3,0} \times \dfrac{1}{3} = 12$ | |
| $AS_{2;1}$ | | $\dfrac{108}{3,0} = 36$ | |
| $AS_{2;2}$ | | $\dfrac{108}{3,0} = 36$ | |
| $AS_{2;3}$ | | $\dfrac{108}{3,0} = 36$ | |
| $AS_{3;1}$ | | | $\dfrac{108}{2,7} = 40$ |
| $AS_{3;2}$ | | | $\dfrac{108}{2,7} = 40$ |
| $AS_{3;3}$ | | | $\dfrac{108}{2,7} = 40$ |
| $\Sigma$ | = 120 | = 120 | = 120 |

Von Interesse ist hierbei die Arbeitsstation AS1,3, die 2/3 der zur Verfügung stehenden Arbeitszeit für Arbeitspaket AP1 (30 Fahrzeuge) und 1/3 der zur Verfügung stehenden Arbeitszeit für Arbeitspaket AP2 (12 Fahrzeuge) verwendet. In Summe werden somit über alle Arbeitsstationen AS alle notwendigen Arbeitspakete AP1-AP3 exakt 120mal abgearbeitet. Die ggf. vorgesehenen und dann bevorzugt vorgelagerten Puffer 20 dienen entsprechend nur dazu, sicher zu stellen, dass eine ggf. temporär auftretende minimale Über- oder Unterproduktion eines Arbeitspaketes AP ausgeglichen werden kann.

Zur Steuerung der oben beschriebenen Prozesse weist die Anlage 1 von Fig.2 eine Steuervorrichtung (in Fig.2 nicht gezeigt) auf, die eingerichtet ist, das Transportsystem 10 zur Zu- und Abfuhr der Produkte und die Arbeitsstationen AS zur Abarbeitung der Arbeitspakete AP zu steuern und die Abarbeitung der unterschiedlichen Arbeitspakete AP in jeder als Wahlarbeitsstation ausgebildeten Arbeitsstation AS in Abhängigkeit von dem für die Arbeitspakete AP jeweils bestimmten Bedarf zu steuern.

Gemäß dem obigen Beispiel kann die Steuervorrichtung dabei eingerichtet sein, den Bedarf als Arbeitstationenbedarf zu bestimmen und den Arbeitstationenbedarf eines jeweiligen Arbeitspaketes AP der Anzahl von Arbeitspaketen AP1-AP3 zu bestimmen auf Basis der Anzahl von Arbeitsstationen AS, der Anzahl von Arbeitspaketen AP, der für das jeweilige Arbeitspaket AP bestimmten erforderlichen Abarbeitungszeit FZ und einer gewünschten Taktzeit $TZ_{soll}$ der Anlage 1, wie in den Vorschriften (6) und (7) gezeigt.

Gemäß dem obigen Beispiel kann die wenigstens eine als Wahlarbeitsstation ausgebildete Arbeitsstation AS so eingerichtet sein, dass darin sowohl ein der vorbestimmten Reihenfolge entsprechendes erstes Arbeitspaket AP als auch ein in der vorbestimmten Reihenfolge dem ersten Arbeitspaket AP nicht unmittelbar benachbartes zweites Arbeitspaket AP der vorbestimmten Anzahl von Arbeitspaketen AP1-AP3 wahlweise abarbeitbar sind, wie in Fig. 2 gezeigt.

Gemäß dem obigen Beispiel kann die wenigstens eine als Wahlarbeitsstation ausgebildete Arbeitsstation AS so eingerichtet sein, dass eines der darin wahlweise abarbeitbaren unterschiedlichen Arbeitspakete AP von der Anzahl von Arbeitspaketen AP1-AP3 das Arbeitspaket mit einer längsten zur Abarbeitung erforderlichen Abarbeitungszeit FZ ist und ein anderes der darin wahlweise abarbeitbaren unterschiedlichen Arbeitspakete AP von der Anzahl von Arbeitspaketen AP1-AP3 das Arbeitspaket AP mit einer kürzesten zur Abarbeitung erforderlichen Abarbeitungszeit FZ ist.

Gemäß dem obigen Beispiel und wie in Fig.2 gezeigt kann außerdem eine der vorbestimmten Anzahl der unterschiedlichen Arbeitspakete AP1-AP3 entsprechende erste Teilanzahl der Anzahl von Arbeitsstationen AS entsprechend der vorbestimmten Reihenfolge der Abarbeitung der unterschiedlichen Arbeitspakete AP1-AP3 in einer ersten Linie (in Fig.2 die oberste Linie) angeordnet sein, wobei mindestens eine (in Fig.2 zwei) richtungsgleich neben der ersten Linie (und bevorzugt parallel dazu) verlaufende weitere Linie (in Fig.2 die beiden unteren Linien) mit einer darin entsprechend der vorbestimmten Reihenfolge der Abarbeitung der unterschiedlichen Arbeitspakete AP1-AP3 angeordneten weiteren Teilanzahl der Anzahl von Arbeitsstationen AS vorgesehen ist, und wobei die in jeder weiteren Linie angeordneten Arbeitsstationen AS in einer senkrecht zu den Linien verlaufenden Richtung bezüglich eines der darin abarbeitbaren Arbeitspakete AP redundant zu den in der ersten Linie angeordneten Arbeitsstationen AS sind.

Mit anderen Worten können die Arbeitsstationen AS ähnlich einer Matrix angeordnet sein, wobei sich unterschiedliche entsprechend der vorbestimmten Reihenfolge der Abarbeitung der unterschiedlichen Arbeitspakete AP1-AP3 angeordnete Arbeitsstationen AS1,1; AS2,1 und AS3,1 entlang der ersten Zeile (ersten Linie) aneinander anschließen und sich senkrecht zur ersten Zeile (gemäß jeweiligen Spalten einer Matrix) zueinander redundante Arbeitsstationen AS1,1; AS1,2 und AS1,3 bzw. AS2,1; AS2,2 und AS2,3 bzw. AS3,1; AS3,2 und AS3,3 aneinander anschließen.

Im Fazit ermöglicht das mit der in Fig.2 dargestellten und oben erläuterten Anlage 1 durchgeführte Matrix-Produktions-Verfahren in diesem Anwendungsbeispiel eine 100%-Auslastung, eine Verringerung der durchschnittlichen Taktzeit TZ und somit eine Produktivitätssteigerung von +10%. Die Anzahl der Arbeitspersonen MA bleibt dabei gegenüber dem mit Bezug auf Fig.1 beschriebenen Beispiel konstant und auch die Inhalte der einzelnen Arbeitspakete AP werden nicht verschoben oder ausgetauscht. Im Vergleich zum mit Bezug auf Fig.1 beschriebenen Beispiel wurden im mit Bezug auf Fig.2 beschriebenen Beispiel lediglich mehrere Arbeitspakete AP zusammengefasst. Die dargestellte Produktivitätssteigerung basiert somit ausschließlich auf dem mit der in Fig.2 dargestellten und oben erläuterten Anlage 1 realisierten Konzept der Matrix-Produktion.

Die zuvor skizzierte beispielhafte Anwendung des Matrix-Produktions-Verfahrens demonstriert deren prinzipielle Funktionsweise und zeigt mit der Steigerung der Produktivität die wesentliche Überlegenheit gegenüber einer einfachen Linienmontage, wie in Fig.1 gezeigt. Ein weiteres wesentliches Element der Matrix-Produktion ist jedoch ihre Fähigkeit zur dynamischen Anpassungsfähigkeit. Hiermit ist gemeint, dass die Matrix-Produktion auch eine dynamische Taktunabhängigkeit realisieren kann, also die Taktunabhängigkeit auch dann noch gewährleisten kann, wenn wechselnde Parameter zu berücksichtigen sind (z.B. unterschiedliche Abarbeitungszeiten FZ gleicher Arbeitspakete AP durch Mehrvariantenbildung) oder zufällige Störungen eintreffen (z.B. Ausfall einer Arbeitsstation AS). Die folgende Tabelle 5 beschreibt einige mögliche dieser bedarfsbeeinflussenden dynamischen Ereignisse.

Tabelle 5

| Ereignis | Wirkung |
|---|---|
| Abwesenheit einer Arbeitsperson | verminderte individuelle Anzahl von MA für betroffene AS und damit Minderung der Produktivität der betroffenen AS |
| Implementation zusätzlicher Fahrzeugvarianten (andere Verbauumfänge) | Unterschiedliche Taktzeiten für gleiches AP |
| technischer Ausfall einer AS (z.B. Ausfall Transportsystem oder Werkzeugschaden) | verringerte Anzahl von AS (geringere Verfügbarkeit) |
| Nacharbeit | einmalig erhöhte Taktzeit für betroffenes Fahrzeug und Arbeitsstation |
| Einsatz einer benachteiligten Arbeitsperson | unterschiedliche Taktzeit und Minderung der Produktivität der betroffenen AS |
| Abschaffung der allgemeinen Taktzeit (Produktionssoll wird vorgegeben, Arbeitsgeschwindigkeit aber von Arbeitspersonen bestimmt) | schwankende / variable Taktzeiten |
| Skalierung der Produktion (entsprechend der Aufträge) | variable Anzahl von MA und aktivierten AS (variable Produktivität und Verfügbarkeit) |

Um die Matrix-Produktion entsprechend stabil zu konzipieren, kann eine wie in der Anlage 1 gemäß Fig.2 gezeigte Weiterbildung der Struktur vorgesehen sein. In dem bis hierher entwickelten Beispiel wurde nur eine Arbeitsstation AS (hier beispielhaft die Arbeitsstation AS1,3) hinsichtlich der optional zu bearbeitenden Arbeitspakete AP (hier beispielhaft die Arbeitspakete AP1 und AP2) dual aufgestellt. Gemäß einer wie in Fig.2 gezeigten Ausführungsform der Anlage 1 können annähernd alle (oder auch alle, nicht dargestellt) Arbeitsstationen AS (die Anzahl kann variabel gestaltet werden) so ausgerüstet sein, dass mehrere unterschiedliche Arbeitspakete AP jeweils darin abgearbeitet werden können.

Die gemäß Fig.2 dargestellte Konfiguration der Anlage 1 hat gegenüber der Minimalausführung mit nur einer Wahlarbeitsstation mehr Kapazitäten zur Abarbeitung der einzelnen Arbeitspakete AP. Gemäß dem hiermit verwirklichten Konzept einer erweiterten Matrix-Produktion werden keine zusätzlichen Arbeitspersonen MA gebunden. Es wird lediglich die "Möglichkeit" vorgehalten, andere Arbeitspakete AP an den unterschiedlichen Arbeitsstationen AS auszuführen.

Insbesondere kann auch hier wieder die wenigstens eine als Wahlarbeitsstation ausgebildete Arbeitsstation AS so eingerichtet sein, dass darin sowohl ein der vorbestimmten Reihenfolge entsprechendes erstes Arbeitspaket AP als auch ein in der vorbestimmten Reihenfolge dem ersten Arbeitspaket AP nicht unmittelbar benachbartes zweites Arbeitspaket AP der vorbestimmten Anzahl von Arbeitspaketen AP1-AP3 wahlweise abarbeitbar sind.

Geht man von einem dynamischen Verhalten des Produktionsablaufs aus (wie zuvor unter Bezug auf Tabelle 5 erläutert), bietet die Auslegung gemäß Fig.2 viele Vorteile und verstärkt das Potenzial der Matrix-Produktion gegenüber der einfachen Linienfertigung.

Die Funktionsweise ist dabei analog zum Anwendungsbeispiel mit fest definierten Abarbeitungszeiten FZ. Kernstück bei der dynamischen Ausführung ist die Steuerung des Transportsystems 10, welches gesteuert durch die Steuervorrichtung die Aufteilung und Zuteilung der Arbeitsstationen AS und Arbeitspakete AP durchgehend auf die veränderten Bedingungen anpasst. Ermöglicht wird dieses durch die vorgehaltenen Kapazitäten bzw. Kompetenzen, unterschiedliche Arbeitspakete AP an den einzelnen Arbeitsstationen AS zu bearbeiten. Es können so drei wesentliche Ungenauigkeiten kompensiert werden:

- variable Taktzeiten TZ
- variable Anzahl von Arbeitsstationen AS
- variable Anzahl von Arbeitspersonen MA

Die gemäß Fig.2 konfigurierte Anlage 1 stellt die Struktur bereit, in einer Matrix-Produktion auf unerwartete oder schwankende Taktzeitveränderungen zu reagieren. Sind beispielsweise die Abarbeitungszeiten FZ der einzelnen Arbeitspakete AP unbekannt oder schwanken sehr stark, so kann die Steuervorrichtung dieses entsprechend kompensieren, indem je nach Bedarf stetig die Zuteilung der Arbeitspakete AP (bzw. der Produkte) auf die zur Verfügung stehenden Arbeitsstationen (welche für die entsprechenden Arbeitspakete AP vorbereitet sind) angepasst wird. Im Prinzip finden die oben ausgeführten Berechnungen bzw. Bestimmungen stetig und bevorzugt in Echtzeit mit den jeweils aktuellen Parametern statt.

Stellt sich zum Beispiel heraus, dass das Arbeitspaket AP3 als Abarbeitungszeit FZ plötzlich 5 min benötigt, kann dies kompensiert werden, indem die Arbeitsstation AS2,3 anteilig auch das Arbeitspaket AP3 ausführt.

Es können aber auch Taktzeitspreizungen innerhalb eines Arbeitspaketes AP kompensiert werden. Dies kann vorliegen, wenn unterschiedliche Varianten eines Produktes gefertigt werden, bei denen die einzelnen Arbeitspakete AP sich teilweise unterscheiden. Auch dann kann die Matrix-Produktion eine 100%-Auslastung garantieren.

Ebenso können Taktzeitdifferenzen kompensiert werden, die sich lokal auf nur eine Arbeitsstation AS oder ein Produkt beziehen. Als Beispiel sei ein Fahrzeug genannt, an dem an einer bestimmten Arbeitsstation AS eine aufwendige Nacharbeit stattfinden muss. Auch wenn dieser Vorgang deutlich länger dauert als die vorgesehene Taktzeit TZ, kann eine stabil ausgelegte Matrix-Produktion dies kompensieren und sicherstellen, dass keine andere Arbeitsstation AS negativ beeinflusst wird. Gerade zeitnahe Anpassungen können aus Gründen einer Reaktionszeit, welche benötigt werden kann, um die laufenden Arbeitsvorgänge abzuschließen und dann die Zuteilung der Arbeitspakete AP und Produkte neu anzupassen, auf die vorgeschalteten Puffer 20 zurückgreifen.

Wie oben schon angedeutet, kann die Steuervorrichtung die Anlage 1 dynamisch ohne Unterbrechung oder Wartezeiten der Arbeitsstationen AS gemäß dem jeweils aktuell bestimmten Bedarf für die Abarbeitung der einzelnen Arbeitspakete AP anpassen. Wie sich aus den obigen Erläuterungen ergibt, kann die Steuervorrichtung dazu eingerichtet sein, den Bedarf auf Basis von wenigstens einem zu bestimmen von einer für die Arbeitspakete AP jeweils bestimmten erforderlichen Abarbeitungszeit FZ, einer jeweils bestimmten Verfügbarkeit von zur Abarbeitung der unterschiedlichen Arbeitspakete AP1-AP3 jeweils eingerichteten Arbeitsstationen AS, und einer jeweils bestimmten Produktivität der zur Abarbeitung der unterschiedlichen Arbeitspakete AP1-AP3 jeweils eingerichteten Arbeitsstationen AS.

Die Stabilität der Matrix-Produktion, also deren Fähigkeit auf unterschiedliche Störungen zu reagieren, hängt stark von der jeweils gewählten Konfiguration ab. Vereinfacht ausgedrückt ist das System umso stabiler, je mehr Arbeitsstationen AS möglichst viele Arbeitspakete AP beherrschen. Im Fazit ist es möglich, die Anlage 1 zur Matrix-Produktion an das gewünschte Maß von Stabilität und Robustheit anzupassen bzw. entsprechend zu konfigurieren. Zu berücksichtigen sind hierbei maßgeblich die individuellen Anforderungen des Produktes und des Produktionssystems, ebenso wie die örtlichen Gegebenheiten. Anzumerken ist hierbei, dass ggf. verschiedene Parameter zu berücksichtigen sind, die die Stabilität beeinflussen können, nämlich: die Anzahl von Arbeitsstationen AS, die Anzahl von Arbeitspersonen MA pro Arbeitsstation AS, die Abarbeitungszeit FZ der jeweiligen Arbeitspakete AP, die Summe der Arbeitspakete AP in Relation zur Summe der Arbeitsstationen AS, die Auslegung und die Anzahl von Puffern 20, die Auslegung des Transportsystems 10, die Abarbeitungszeit-Differenz von größtem Arbeitspaket AP zu kleinstem Arbeitspaket AP und die Anzahl von abarbeitbaren Arbeitspaketen AP pro Arbeitsstation AS.

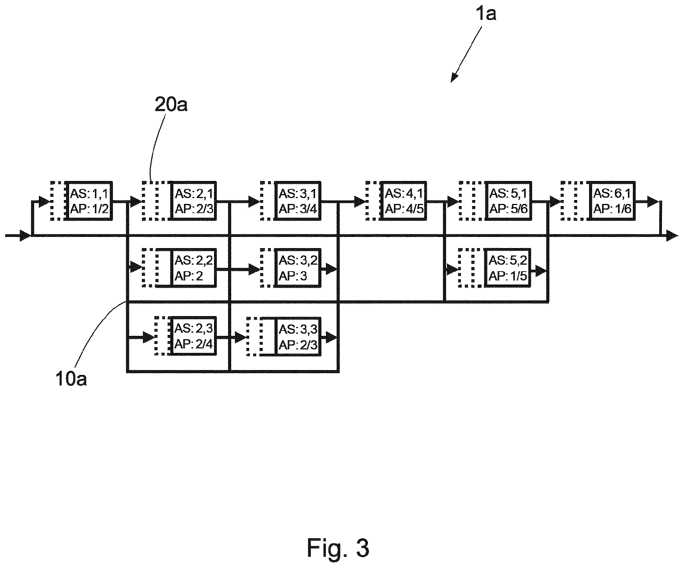

Nun wird unter Bezugnahme auf Fig.3 eine zweite Ausführungsform des erfindungsgemäßen Verfahrens und einer erfindungsgemäßen Anlage 1a zur Herstellung von Produkten beschrieben werden. Die in Fig.3 dargestellte Anlage 1a stellt eine hinsichtlich der Anordnung von redundanten Arbeitsstationen AS abgespeckte bzw. reduzierte Variante der in Fig.2 gezeigten Anlage 1 dar und weist im Wesentlichen gleich konfigurierte Komponenten wie die in Fig.2 gezeigte Anlage 1 auf, jedoch können diese in Anpassung an die Struktur der Anlage 1a von Fig.3 modifiziert sein.

D.h., die in Fig.3 gezeigte Anlage 1a ist vorgesehen zur Herstellung von Produkten mittels einer vorbestimmten Anzahl von jeweils mindestens einen Arbeitsschritt enthaltenden unterschiedlichen Arbeitspaketen AP1-AP6 und weist eine vorbestimmte Anzahl von Arbeitsstationen AS1,1; AS2,1-AS2,3; AS3,1-AS3,3; AS4,1;AS5,1-AS5,2 und AS6,1 auf, die eingerichtet sind, die Anzahl von Arbeitspaketen AP1-AP6 in einer vorbestimmten Reihenfolge nacheinander abzuarbeiten. Die Anlage 1a gemäß Fig.3 weist ferner ein Transportsystem 10a, einen oder mehrere Puffer 20a und eine Steuervorrichtung (nicht gezeigt) auf.

Mindestens eine der Arbeitsstationen AS ist wieder als Wahlarbeitsstation ausgebildet, sodass in dieser mindestens zwei unterschiedliche Arbeitspakete AP der Anzahl von Arbeitspaketen AP1-AP6 wahlweise abarbeitbar sind. Mit anderen Worten sind wieder mindestens eine Arbeitsstation AS, mehrere Arbeitsstationen AS oder alle Arbeitsstationen AS so ausgelegt (technisch als auch die Kompetenz der daran arbeitenden Arbeitspersonen MA), dass darin mindestens zwei unterschiedliche Arbeitspakete AP abgearbeitet werden können.

Betrachtet wird für die in Fig.3 gezeigte Anlage 1a ein vereinfachtes Beispiel einer Produktion von Hochvolt-Batterien (HV-Batterien) für Elektrofahrzeuge. Dabei beschränkt sich dieses Beispiel auf das Zusammenstellen der einzelnen Batteriezellen (Pakageing) zu zwei unterschiedliche Arten von HV-Batterien (im Folgenden große und kleine Batterien genannt).

Vereinfacht dargestellt sieht der Prozess wie folgt aus:

1. Vorbereiten einer jeweiligen Batterieschale
2. Pakageing der Batteriezellen vom Typ 1 und Verbau in Batterieschale
3. Pakageing der Batteriezellen vom Typ 2 und Verbau in Batterieschale
4. Einbau der Elektroniksteuerung
5. Kabelverbindungen legen und verlöten
6. Batterieschale mit Deckel versehen und abdichten

Eine beispielhafte Vorgabe dieses Produktionsprozesses ist, dass beide Batteriearten alle diese Produktionsschritte (Arbeitspakete AP1-AP6) durchlaufen und (abgesehen von der Batterieschale und dem Deckel) auch dieselben Bauteile bekommen. (Beide Batteriearten bestehen zu unterschiedlichen Anteilen aus beiden Typen von Batteriezellen). Die folgende Tabelle 6 beschreibt die ungefähre Abarbeitungszeit FZ für jedes Arbeitspaket AP und beide Batteriearten (große und kleine).

Tabelle 6

| Arbeitspakete : | Abarbeitungszeit kleine Batterie: | Abarbeitungszeit große Batterie: |
|---|---|---|
| | | |
| AP1 | 1 [min/MA] | 1 [min/MA] |
| AP2 | 4 [min/MA] | 6 [min/MA] |
| AP3 | 2 [min/MA] | 6 [min/MA] |
| AP4 | 1 [min/MA] | 1 [min/MA] |
| AP5 | 5 [min/MA] | 8 [min/MA] |
| AP6 | 2 [min/MA] | 3 [min/MA] |
| Σ | 15 [min/MA] | 25 [min/MA] |

Die Reihenfolge, in der die Arbeitspakete AP1-AP6 bearbeitet werden sollen, entspricht der Nummerierung. Außerdem ist es nicht gewünscht, dass Arbeitspakete zusammengefasst oder andersartig angepasst werden. Pro Arbeitsstation AS soll aus Platzgründen nur eine Arbeitsperson MA arbeiten.

Die Basis der Struktur der in Fig.3 gezeigten Anlage 1a liegt in der von den Arbeitsstationen AS1,1 bis AS6,1 gebildeten obersten Linie. Jede Arbeitsstation AS1,1-AS6,1 dieser obersten Linie ist in der Lage, zwei unterschiedliche Arbeitspakete AP zu bearbeiten.

Auch gemäß der Struktur der in Fig.3 gezeigten Anlage 1a kann die wenigstens eine als Wahlarbeitsstation ausgebildete Arbeitsstation AS wieder so eingerichtet sein, dass darin sowohl ein der vorbestimmten Reihenfolge entsprechendes erstes Arbeitspaket AP als auch ein in der vorbestimmten Reihenfolge dem ersten Arbeitspaket AP nicht unmittelbar benachbartes zweites Arbeitspaket AP der vorbestimmten Anzahl von Arbeitspaketen AP1-AP3 wahlweise abarbeitbar sind.

Genauer sind bei der in Fig.3 gezeigten Anlage 1a hinsichtlich der in der vorbestimmten Reihenfolge Abarbeitung der unterschiedlichen Arbeitspakete AP1-AP6 aufeinanderfolgende jeweils als Wahlarbeitsstationen ausgebildete Arbeitsstationen AS1,1-AS5,1 jeweils so eingerichtet sind, dass in diesen sowohl das der vorbestimmten Reihenfolge jeweils entsprechende Arbeitspaket AP als auch das in der vorbestimmten Reihenfolge jeweils unmittelbar nachgeordnete Arbeitspaket AP wahlweise abarbeitbar sind, wobei die wenigstens eine als Wahlarbeitsstation ausgebildete Arbeitsstation AS, die eingerichtet ist, dass darin sowohl ein der vorbestimmten Reihenfolge entsprechendes erstes Arbeitspaket AP als auch ein in der vorbestimmten Reihenfolge dem ersten Arbeitspaket AP nicht unmittelbar benachbartes zweites Arbeitspaket AP der vorbestimmten Anzahl von Arbeitspaketen AP1-AP6 wahlweise abarbeitbar sind, von der in der vorbestimmten Reihenfolge letzten Arbeitsstation AS6,1 gebildet ist.

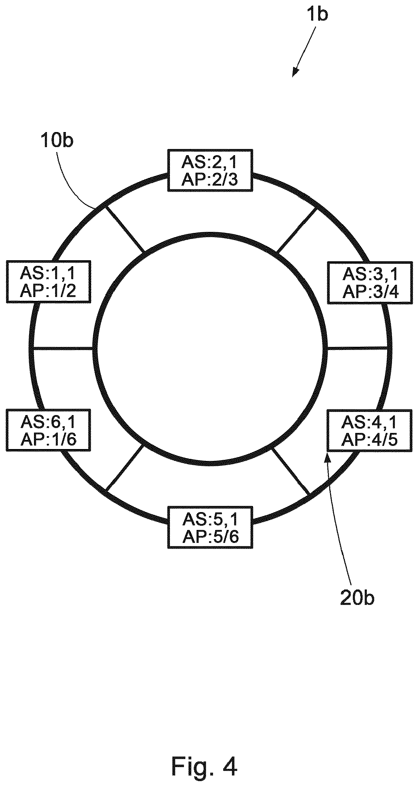

Auf diese Weise ist bereits jedes Arbeitspaket AP doppelt berücksichtigt. Bei einer geringen Taktzeitspreizung ließe sich so schon eine vereinfachte Matrix-Produktion realisieren. Eine wie in Fig.4 mit einer Anlage 1b gemäß einer dritten Ausführungsform der Erfindung gezeigte Ringanordnung, welche der ersten Linie in Fig.3 entspricht, wäre dann zu bevorzugen.

Um eine stabilere Matrix-Produktion zu realisieren, sollen die Arbeitspakete AP2, AP3 und AP5, die besonders lange dauern, wieder mit mehreren bzw. redundanten Arbeitsstationen AS versehen sein.

Die Arbeitsstationen AS sind entsprechend ihrer Anforderungen aufgebaut, wobei die Arbeitsstationen AS ggf. auch räumlich unterteilt sein können. So könnten Arbeiten für die vorgesehenen Arbeitspakete AP auf unterschiedlichen Seiten der Arbeitsstation AS durchgeführt werden. Aber auch Synergien selber Werkzeuge und Prozesse lassen sich nutzen. So ist das Anbringen der Batteriezellen vom Typ 1 und Typ 2 sowie der Elektronik mit denselben Vorrichtungen möglich.

Die Materialanlieferung gestaltet sich auch relativ einfach, da in beiden zu produzierenden Batteriearten dieselben Bauteile verbaut werden. Ein einfaches Logistikkonzept mit definiertem Materialvorhalt an den Arbeitsstationen AS ist ausreichend.

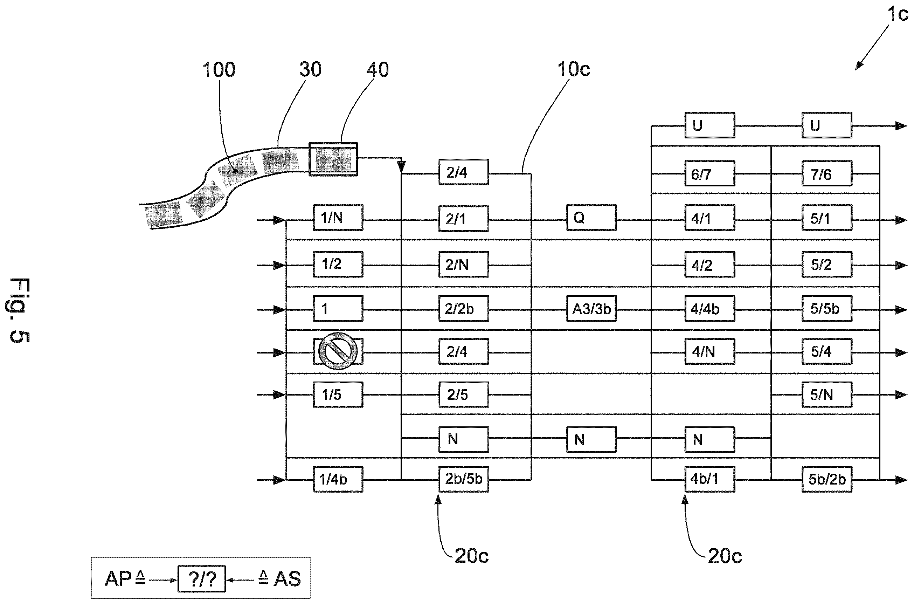

Nun wird unter Bezugnahme auf Fig.5 eine vierte Ausführungsform des erfindungsgemäßen Verfahrens und einer entsprechenden Anlage 1c zur Herstellung von Produkten beschrieben werden. Die in Fig.5 dargestellte Anlage 1c stellt eine hinsichtlich der Anordnung von redundanten Arbeitsstationen AS modifizierte Variante der in den Figuren 2 und 3 gezeigten Anlagen 1 bzw. 1a dar und weist im Wesentlichen gleich konfigurierte Komponenten wie diese Anlagen 1 bzw. 1a auf, jedoch können diese in Anpassung an die Struktur der Anlage 1c von Fig.5 modifiziert sein.

D.h., die in Fig.5 gezeigte Anlage 1c ist vorgesehen zur Herstellung von Produkten mittels einer vorbestimmten Anzahl von jeweils mindestens einen Arbeitsschritt enthaltenden unterschiedlichen Arbeitspaketen AP und weist eine vorbestimmte Anzahl von Arbeitsstationen AS auf, die eingerichtet sind, die Anzahl von Arbeitspaketen AP in einer vorbestimmten Reihenfolge nacheinander abzuarbeiten. Die Anlage 1c gemäß Fig.5 weist ferner ein Transportsystem 10c, einen oder mehrere Puffer 20c und eine Steuervorrichtung (nicht gezeigt) auf.

Mindestens eine der Arbeitsstationen AS ist wieder als Wahlarbeitsstation ausgebildet, sodass in dieser mindestens zwei unterschiedliche Arbeitspakete AP der Anzahl von Arbeitspaketen AP wahlweise abarbeitbar sind. Mit anderen Worten sind wieder mindestens eine Arbeitsstation AS, mehrere Arbeitsstationen AS oder alle Arbeitsstationen AS so ausgelegt (technisch als auch die Kompetenz der daran arbeitenden Arbeitspersonen MA), dass darin mindestens zwei unterschiedliche Arbeitspakete AP abgearbeitet werden können.

Auch gemäß der Struktur der in Fig.5 gezeigten Anlage 1c kann die wenigstens eine als Wahlarbeitsstation ausgebildete Arbeitsstation AS wieder so eingerichtet sein, dass darin sowohl ein der vorbestimmten Reihenfolge entsprechendes erstes Arbeitspaket AP als auch ein in der vorbestimmten Reihenfolge dem ersten Arbeitspaket AP nicht unmittelbar benachbartes zweites Arbeitspaket AP der vorbestimmten Anzahl von Arbeitspaketen AP wahlweise abarbeitbar sind. In Fig.5 entsprechen die rechteckigen Kästchen den jeweiligen Arbeitsstationen und entsprechen die Angaben in den rechteckigen Kästchen den dort jeweils abarbeitbaren Arbeitspaketen AP, wie in der Legende von Fig.5 links unten angegeben.

Im Detail kennzeichnen die Ziffern 1-7 die unterschiedlichen in der Reihenfolge der Ziffern abzuarbeitenden Arbeitspakete AP, wobei die Arbeitspakete AP noch einmal unterteilt sind, indem für zwei unterschiedliche Produktmodelle bzw. varianten die jeweiligen Ziffern 2-7 entweder mit oder ohne den Zusatz des Buchstabens "b" gekennzeichnet sind. Die Ziffern 2-7 ohne den Buchstaben "b" kennzeichnen somit Arbeitspakete AP für ein erstes Produktmodell und die Ziffern 2-7 mit dem Buchstaben "b" kennzeichnen Arbeitspakete AP für ein zweites Produktmodell. Das Arbeitspaket AP1 ist für beide Produktmodelle gleich. Zusätzlich sollen Arbeitsstationen AS variabel Nacharbeiten durchführen können, was als Arbeitspaket AP mit dem Buchstaben "N" gekennzeichnet ist. Zudem sollen Arbeitsstationen AS Qualitätsprüfungen durchführen können, was als Arbeitspaket AP mit dem Buchstaben "Q" gekennzeichnet ist. Schließlich sollen Arbeitsstationen AS als Universalarbeitsstationen ausgebildet sein, was als Arbeitspaket AP mit dem Buchstaben "U" gekennzeichnet ist. Außerdem sollen eine (wie dargestellt) oder mehrere Arbeitsstationen AS automatisiert sein, also ohne Arbeitspersonen MA auskommen, und sind demnach zusätzlich mit dem Buchstaben "A" gekennzeichnet. Letztendlich sind eine (wie dargestellt) oder mehrere Arbeitsstationen AS außer Betrieb, was mit einem "Halteverbotszeichen" gekennzeichnet ist.

Gemäß Fig.5 können die in einem vorbestimmten Fertigstellungszustand befindlichen Rohprodukte 100 über ein Fließband 30 und eine Übergabestation 40 in die Anlage 1c eingeschleust werden. Weitere Produkteinschleusungsmöglichkeiten sind durch in die Anlage 1c hineingehende Pfeile dargestellt, und Produktausschleusungsmöglichkeiten sind durch aus der Anlage 1c hinausgehende Pfeile dargestellt.

Im Fazit stellt die vorliegende Offenbarung gemäß den unterschiedlichen Ausführungsformen nach den Figuren 2, 3, 4 und 5 jeweils eine Kombination aus einem autonom arbeitenden Transportsystem 10, 10a, 10b und 10c und dem Konzept dar, einer Arbeitsstation AS mehrere (voneinander unabhängige) Arbeitsinhalte zuzuordnen.

Bei allen unterschiedlichen Ausführungsformen nach den Figuren 2, 3, 4 und 5 kann die Anzahl von Arbeitsstationen AS so bemessen sein, dass zur Abarbeitung jedes Arbeitspaketes AP jeweils mindestens zwei Arbeitsstationen AS vorgesehen sind. Alternativ oder zusätzlich kann die Anzahl von pro Arbeitspaket AP vorgesehenen Arbeitsstationen AS gleich der Anzahl von Arbeitspaketen AP sein.

Bei dem hierin beschriebenen und auf den Anlagen 1, 1a, 1b und 1c jeweils durchführbaren Matrix-Produktions-Verfahren handelt es sich um ein Produktionskonzept (ähnlich wie die Linienfertigung eines ist), das ohne feste Taktzeiten auskommen kann. Dementsprechend handelt es sich bei der Matrix-Produktion um eine taktunabhängige Fließfertigung. Dementsprechend ist die Matrix-Produktion nicht auf Montageprozesse oder die Fahrzeugproduktion beschränkt. Durch die Matrix-Produktion und damit durch die Anlagen 1, 1a, 1b und 1c ist bei gesteigerter Flexibilität eine höhere Produktivität erzielbar. Außerdem können auch verbesserte Arbeitsbedingungen für die Arbeitspersonen erzielt werden.

**Bezugszeichenliste**

| 1', 1a-1c | Anlage |
|---|---|
| 10a-10c | Transportsystem |
| 20a-20c | Puffer |
| 30 | Fließband |
| 40 | Übergabestation |
| 100 | Rohprodukte |
| AS | Arbeitsstation |
| AP | Arbeitspaket |
| FZ | Abarbeitungszeit |

**Patentansprüche**

1. Anlage (1, 1a, 1b, 1c) zur Herstellung von Produkten mittels einer vorbestimmten Anzahl von jeweils mindestens einen Arbeitsschritt enthaltenden unterschiedlichen Arbeitspaketen (AP), aufweisend:

eine vorbestimmte Anzahl von Arbeitsstationen (AS), die eingerichtet sind, die Anzahl von Arbeitspaketen (AP) in einer vorbestimmten Reihenfolge nacheinander abzuarbeiten, um die Produkte herzustellen, wobei mindestens eine der Arbeitsstationen (AS) als Wahlarbeitsstation ausgebildet ist, sodass in dieser mindestens zwei unterschiedliche Arbeitspakete (AP) der Anzahl von Arbeitspaketen (AP) wahlweise abarbeitbar sind, ein Transportsystem (10, 10a, 10b, 10c), das eingerichtet ist, die Produkte in ihren jeweiligen Fertigstellungsgraden entlang eines Transportweges den Arbeitsstationen (AS) zuzuführen und von diesen abzuführen und so eingerichtet ist, dass die Produkte von mehreren Positionen auf dem Transportweg aus jeweils mehreren der Arbeitsstationen (AS) wahlweise direkt zuführbar sind, und eine Steuervorrichtung, die eingerichtet ist, das Transportsystem (10, 10a, 10b, 10c) zur Zu- und Abfuhr der Produkte und die Arbeitsstationen (AS) zur Abarbeitung der Arbeitspakete (AP) zu steuern und die Abarbeitung der unterschiedlichen Arbeitspakete (AP) in jeder als Wahlarbeitsstation ausgebildeten Arbeitsstation (AS) in Abhängigkeit von einem für die Arbeitspakete (AP) jeweils bestimmten Bedarf zu steuern, **dadurch gekennzeichnet, dass** die wenigstens eine als Wahlarbeitsstation ausgebildete Arbeitsstation (AS) so eingerichtet ist, dass darin sowohl ein der vorbestimmten Reihenfolge entsprechendes erstes Arbeitspaket (AP) als auch ein in der vorbestimmten Reihenfolge dem ersten Arbeitspaket (AP) nicht unmittelbar benachbartes zweites Arbeitspaket (AP) der vorbestimmten Anzahl von Arbeitspaketen (AP) wahlweise abarbeitbar sind, wobei die wenigstens eine als Wahlarbeitsstation ausgebildete Arbeitsstation (AS) so eingerichtet ist, dass eines der darin wahlweise abarbeitbaren unterschiedlichen Arbeitspakete (AP) von der Anzahl von Arbeitspaketen (AP) das Arbeitspaket (AP) mit einer längsten zur Abarbeitung erforderlichen Abarbeitungszeit (FZ) ist und ein anderes der darin wahlweise abarbeitbaren unterschiedlichen Arbeitspakete (AP) von der Anzahl von Arbeitspaketen (AP) das Arbeitspaket (AP) mit einer kürzesten zur Abarbeitung erforderlichen Abarbeitungszeit (FZ) ist.

2. Anlage (1, 1a, 1b, 1c) gemäß Anspruch 1, wobei die Steuervorrichtung eingerichtet ist, den Bedarf auf Basis von wenigstens einem zu bestimmen von einer für die Arbeitspakete (AP) jeweils bestimmten erforderlichen Abarbeitungszeit (FZ), einer jeweils bestimmten Verfügbarkeit von zur Abarbeitung der unterschiedlichen Arbeitspakete (AP) jeweils eingerichteten Arbeitsstationen (AS) und einer jeweils bestimmten Produktivität der zur Abarbeitung der unterschiedlichen Arbeitspakete (AP) jeweils eingerichteten Arbeitsstationen (AS).

3. Anlage (1, 1a, 1b, 1c) gemäß Anspruch 2, wobei die Steuervorrichtung eingerichtet ist, den Bedarf als Arbeitstationenbedarf zu bestimmen, und eingerichtet ist, den Arbeitstationenbedarf eines Arbeitspaketes (AP) der Anzahl von Arbeitspaketen (AP) zu bestimmen auf Basis der Anzahl von Arbeitsstationen (AS), der Anzahl von Arbeitspaketen (AP), der für das eine Arbeitspaket (AP) bestimmten erforderlichen Abarbeitungszeit (FZ) und einer gewünschten Taktzeit ($TZ_{soll}$) der Anlage (1, 1a, 1b, 1c).

4. Anlage (1, 1a, 1b, 1c) gemäß einem der Ansprüche 1 bis 3, wobei das Transportsystem (10, 10a, 10b, 10c) so eingerichtet ist, dass die Produkte von jeder beliebigen Position auf dem Transportweg aus jeder der Arbeitsstationen (AS) wahlweise direkt zuführbar sind.

5. Anlage (1, 1a, 1b, 1c) gemäß einem der Ansprüche 1 bis 4, wobei die Anzahl von Arbeitsstationen (AS) so bemessen ist, dass zur Abarbeitung jedes Arbeitspaketes (AP) jeweils mindestens zwei Arbeitsstationen (AS) vorgesehen sind.

6. Anlage (1, 1a, 1b, 1c) gemäß einem der Ansprüche 1 bis 5, wobei die Anzahl von pro Arbeitspaket (AP) vorgesehenen Arbeitsstationen (AS) gleich der Anzahl von Arbeitspaketen (AP) ist.

7. Anlage (1a, 1b) gemäß einem der Ansprüche 1 bis 6, wobei hinsichtlich der in der vorbestimmten Reihenfolge Abarbeitung der unterschiedlichen Arbeitspakete (AP1-AP6) aufeinanderfolgende jeweils als Wahlarbeitsstationen ausgebildete Arbeitsstationen (AS1,1-AS5,1) jeweils so eingerichtet sind, dass in diesen sowohl das der vorbestimmten Reihenfolge jeweils entsprechende Arbeitspaket (AP) als auch das in der vorbestimmten Reihenfolge jeweils unmittelbar nachgeordnete Arbeitspaket wahlweise abarbeitbar sind, und wobei die wenigstens eine als Wahlarbeitsstation ausgebildete Arbeitsstation von einer in der vorbestimmten Reihenfolge letzten Arbeitsstation (AS6,1) gebildet ist.

8. Anlage (1, 1a, 1c) gemäß einem der Ansprüche 1 bis 7, wobei eine der vorbestimmten Anzahl der unterschiedlichen Arbeitspakete (AP) entsprechende erste Teilanzahl der Anzahl von Arbeitsstationen (AS) entsprechend der vorbestimmten Reihenfolge der Abarbeitung der unterschiedlichen Arbeitspakete (AP) in einer ersten Linie angeordnet sind, wobei mindestens eine richtungsgleich neben der ersten Linie verlaufende weitere Linie mit einer darin entsprechend der vorbestimmten Reihenfolge der Abarbeitung der unterschiedlichen Arbeitspakete (AP) angeordneten weiteren Teilanzahl der Anzahl von Arbeitsstationen (AS) vorgesehen ist, und wobei die in jeder weiteren Linie angeordneten Arbeitsstationen (AS) in einer senkrecht zu den Linien verlaufenden Richtung bezüglich eines der darin abarbeitbaren Arbeitspakete (AP) redundant zu den in der ersten Linie angeordneten Arbeitsstationen (AS) sind.

9. Anlage (1, 1a, 1b, 1c) gemäß einem der Ansprüche 1 bis 8, wobei im Transportweg mindestens einer Arbeitsstation (AS) ein Puffer (20, 20a, 20b, 20c) zugeordnet ist, in dem mindestens ein Produkt in einem jeweiligen Fertigstellungsgrad aufnehmbar ist.

**Claims**

1. Plant (1, 1a, 1b, 1c) for producing products by means of a predetermined number of different work packets (AP) each containing at least one work step, having:

   a predetermined number of workstations (AS) configured to process the number of work packets (AP) in a predetermined order one after another so as to produce the products, wherein at least one of the workstations (AS) is in the form of a selection workstation, so that at least two different work packets (AP) from the number of work packets (AP) are selectively processable in said selection workstation,

   a transport system (10, 10a, 10b, 10c) that is configured to supply the products at their respective stages of completion to the workstations (AS), and to take said products away therefrom, along a transport path and is configured such that the products are each selectively directly suppliable to multiple instances of the workstations (AS) from multiple positions on the transport path, and

   a control apparatus configured to control the transport system (10, 10a, 10b, 10c) for supplying and taking away the products and the workstations (AS) for processing the work packets (AP) and to control the processing of the different work packets (AP) in each workstation (AS) in the form of a selection workstation on the basis of a need respectively determined for the work packets (AP),

   **characterized in that**

   the at least one workstation (AS) in the form of a selection workstation is configured such that both a first work packet (AP) corresponding to the predetermined order and a second work packet (AP), not immediately adjacent to the first work packet (AP) in the predetermined order, from the predetermined number of work packets (AP) are selectively processable in said workstation, wherein the at least one workstation (AS) in the form of a selection workstation is configured such that one of the different work packets (AP) selectively processable therein from the number of work packets (AP) is the work packet (AP) having a longest processing time (FZ) required for processing and another of the different work packets (AP) selectively processable therein from the number of work packets (AP) is the work packet (AP) having a shortest processing time (FZ) required for processing.

2. Plant (1, 1a, 1b, 1c) according to Claim 1, wherein the control apparatus is configured to determine the need on the basis of at least one from a required processing time (FZ) respectively determined for the work packets (AP), a respectively determined availability of workstations (AS) respectively configured for processing the different work packets (AP) and a respectively determined productivity of the workstations (AS) respectively configured for processing the different work packets (AP).

3. Plant (1, 1a, 1b, 1c) according to Claim 2, wherein the control apparatus is configured to determine the need as a workstation need, and is configured to determine the workstation need for a work packet (AP) from the number of work packets (AP) on the basis of the number of workstations (AS), the number of work packets (AP), the required processing time (FZ) determined for the one work packet (AP) and a desired cycle time ($TZ_{des}$) of the plant (1, 1a, 1b, 1c).

4. Plant (1, 1a, 1b, 1c) according to one of Claims 1 to 3, wherein the transport system (10, 10a, 10b, 10c) is configured such that the products are selectively directly suppliable to each of the workstations (AS) from any desired position on the transport path.

5. Plant (1, 1a, 1b, 1c) according to one of Claims 1 to 4, wherein the number of workstations (AS) is proportioned such that there is in each case provision for at least two workstations (AS) for processing each work packet (AP).

6. Plant (1, 1a, 1b, 1c) according to one of Claims 1 to 5, wherein the number of workstations (AS) provided per work packet (AP) is identical to the number of work packets (AP).

7. Plant (1a, 1b) according to one of Claims 1 to 6, wherein successive workstations (AS1,1-AS5,1), each in the form of selection workstations, are each configured in respect of the processing of the different work packets (AP1-AP6) in the predetermined order such that both the work packet (AP) respectively corresponding to the predetermined order and the work packet that is respectively immediately subsequent in the predetermined order are selectively processable in said workstations, and wherein the at least one workstation in the form of a selection workstation is formed by a last workstation (AS6,1) in the predetermined order.

8. Plant (1, 1a, 1c) according to one of Claims 1 to 7, wherein a first partial number, corresponding to the predetermined number of different work packets (AP), from the number of workstations (AS) are arranged in a first line in accordance with the predetermined order of processing of the different work packets (AP), wherein there is provision for at least one further line, running beside the first line in the same direction, with a further partial number, arranged in said further line in accordance with the predetermined order of processing of the different work packets (AP), from the number of workstations (AS), and wherein the workstations (AS) arranged in each further line are redundant with respect to the workstations (AS) arranged in the first line with regard to one of the work packets (AP) processable in said workstations in a direction running perpendicular with respect to the lines.

9. Plant (1, 1a, 1b, 1c) according to one of Claims 1 to 8, wherein at least one workstation (AS) has an associated buffer (20, 20a, 20b, 20c) in the transport path, at least one product at a respective stage of completion being receivable in said buffer.

**Revendications**

1. Installation (1, 1a, 1b, 1c) destinée à fabriquer des produits au moyen d'un nombre prédéterminé de paquets de travail (AP) contenant respectivement au moins une étape de travail, comprenant :

   un nombre prédéterminé de stations de travail (AS), qui sont conçues pour traiter le nombre de paquets de travail (AP) dans une séquence prédéterminée l'un après l'autre en vue de fabriquer les produits, au moins l'une des stations de travail (AS) étant réalisée sous la forme d'une station de travail de sélection, de sorte qu'au moins deux paquets de travail (AP) différents du nombre de paquets de travail (AP) peuvent être traités sélectivement dans celle-ci,
   un système de transport (10, 10a, 10b, 10c), qui est conçu pour acheminer les produits dans leurs degrés d'achèvement respectifs aux stations de travail (AS) le long d'un trajet de transport et pour les en évacuer, et qui est conçu de telle sorte que les produits peuvent être acheminés depuis plusieurs positions sur le trajet de transport au choix directement à plusieurs respectives des stations de travail (AS), et
   un arrangement de commande, qui est conçu pour commander le système de transport (10, 10a, 10b, 10c) pour l'acheminement et l'évacuation des produits et les stations de travail (AS) pour le traitement des paquets de travail (AP) et pour commander le traitement des différents paquets de travail (AP) dans chaque station de travail (AS) configurée en tant que station de travail de sélection en fonction d'un besoin respectivement déterminé pour les paquets de travail (AP),
   **caractérisée en ce que**
   l'au moins une station de travail (AS) configurée en tant que station de travail de sélection est conçue de telle sorte qu'à la fois un premier paquet de travail (AP), correspondant à la séquence prédéterminée, ainsi qu'un deuxième paquet de travail (AP), non directement voisin du premier paquet de travail (AP), du nombre prédéterminé de paquets de travail (AP) peuvent être traités sélectivement dans celle-ci, l'au moins une station de travail (AS) configurée en tant que station de travail de sélection étant conçue de telle sorte que l'un des différents paquets de travail (AP) du nombre de paquets de travail (AP) qui peuvent être traités sélectivement dans celle-ci est le paquet de travail (AP) ayant un temps de traitement (FZ) nécessaire pour le traitement le plus long et un autre des différents paquets de travail (AP) du nombre de paquets de travail (AP) qui peuvent être traités sélectivement dans celle-ci est le paquet de travail (AP) ayant un temps de traitement (FZ) nécessaire pour le traitement le plus court.

2. Installation (1, 1a, 1b, 1c) selon la revendication 1, l'arrangement de commande étant conçu pour déterminer le besoin sur la base d'au moins l'un des éléments suivants : un temps de traitement (FZ) nécessaire respectivement déterminé pour les paquets de travail (AP), une disponibilité respectivement déterminée des stations de travail (AS) respectivement conçues pour le traitement des différents paquets de travail (AP) et une productivité respectivement déterminée pour des stations de travail (AS) respectivement conçues pour le traitement des différents paquets de travail (AP).

3. Installation (1, 1a, 1b, 1c) selon la revendication 2, l'arrangement de commande étant conçu pour déterminer le besoin en tant que besoin en stations de travail, et conçu pour déterminer le besoin en stations de travail d'un paquet de travail (AP) du nombre de paquets de travail (AP) sur la base du nombre de stations de travail (AS), du nombre de paquets de travail (AP), du temps de traitement (FZ) nécessaire déterminé pour ledit paquet de travail (AP) et un temps de cycle souhaité ($TZ_{soll}$) de l'installation (1, 1a, 1b, 1c).

4. Installation (1, 1a, 1b, 1c) selon l'une des revendications 1 à 3, le système de transport (10, 10a, 10b, 10c) étant conçu de telle sorte que les produits peuvent être acheminés depuis chaque position quelconque sur le trajet de transport au choix directement à chacune des stations de travail (AS).

5. Installation (1, 1a, 1b, 1c) selon l'une des revendications 1 à 4, le nombre de stations de travail (AS) étant fixé de telle sorte qu'au moins deux stations de travail (AS) sont respectivement présentes pour le traitement de chaque paquet de travail (AP).

6. Installation (1, 1a, 1b, 1c) selon l'une des revendications 1 à 5, le nombre de stations de travail (AS) présentes par paquet de travail (AP) étant égal au nombre de paquets de travail (AP).

7. Installation (1a, 1b) selon l'une des revendications 1 à 6, les stations de travail (AS1, 1-AS5,1) successives respectivement configurées en tant que stations de travail de sélection, du point de vue du traitement dans la séquence prédéterminée des différents paquets de travail (AP1-AP6), étant conçues de telle sorte qu'à la fois le paquet de travail (AP) correspondant respectivement à la séquence prédéterminée ainsi que le paquet de travail respectivement disposé immédiatement à la suite dans la séquence prédéterminée peuvent être traités sélectivement dans celles-ci, et l'au moins une station de travail configurée en tant que station de travail de sélection étant formée par une dernière station de travail (AS6,1) dans la séquence prédéterminée.

8. Installation (1, 1a, 1c) selon l'une des revendications 1 à 7, un premier nombre partiel du nombre de stations de travail (AS) correspondant au nombre prédéterminé de différents paquets de travail (AP) étant disposées dans une première ligne conformément à la séquence prédéterminée du traitement des différents paquets de travail (AP), au moins une ligne supplémentaire dans laquelle sont disposées un nombre partiel supplémentaire du nombre de stations de travail (AS) conformément à la séquence prédéterminée du traitement des différents paquets de travail (AP) étant présente à côté de la première ligne en suivant un tracé dans le même sens, et les stations de travail (AS) disposées dans chaque ligne supplémentaire, en référence à l'un des paquets de travail (AP) qui peut être traité dans celles-ci, étant redondantes aux stations de travail (AS) disposées dans la première ligne dans une direction qui suit un tracé perpendiculaire par rapport aux lignes.

9. Installation (1, 1a, 1b, 1c) selon l'une des revendications 1 à 8, un tampon (20, 20a, 20b, 20c) étant associé à au moins une station de travail (AS) dans le trajet de transport, dans lequel peut être accueilli au moins un produit dans un état d'achèvement respectif.

1'

```
┌─────────┐    ┌─────────┐    ┌─────────┐    ┌─────────┐    ┌─────────┐
│ AP:1    │──▶ │ AP:2    │──▶ │ AP:3    │──▶ │ AP:4    │──▶ │ AP:5    │
│ AS:1    │    │ AS:2    │    │ AS:3    │    │ AS:4    │    │ AS:5    │
└─────────┘    └─────────┘    └─────────┘    └─────────┘    └─────────┘

┌─────────┐    ┌─────────┐    ┌─────────┐    ┌─────────┐    ┌─────────┐
│ AP:10   │◀── │ AP:9    │◀── │ AP:8    │◀── │ AP:7    │◀── │ AP:6    │
│ AS:10   │    │ AS:9    │    │ AS:8    │    │ AS:7    │    │ AS:6    │
└─────────┘    └─────────┘    └─────────┘    └─────────┘    └─────────┘

┌─────────┐    ┌─────────┐    ┌─────────┐    ┌─────────┐    ┌─────────┐
│ AP:11   │──▶ │ AP:12   │──▶ │ AP:13   │──▶ │ AP:14   │──▶ │ AP:15   │
│ AS:11   │    │ AS:12   │    │ AS:13   │    │ AS:14   │    │ AS:15   │
└─────────┘    └─────────┘    └─────────┘    └─────────┘    └─────────┘

               ┌─────────┐    ┌─────────┐    ┌─────────┐
               │ AP:18   │◀── │ AP:17   │◀── │ AP:16   │
               │ AS:18   │    │ AS:17   │    │ AS:16   │
               └─────────┘    └─────────┘    └─────────┘
```

Fig. 1

Fig. 2

Fig. 3

1b

10b

AS:2,1
AP:2/3

AS:1,1
AP:1/2

AS:3,1
AP:3/4

AS:6,1
AP:1/6

AS:4,1
AP:4/5

AS:5,1
AP:5/6

20b

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007047279 A1
- DE 102005034079 A1
- EP 0107191 A2
- US 4309600 A
- EP 2239093 A1
- JP H11188579 A